# EUROPÄISCHE PATENTSCHRIFT

(11) **EP 3 068 616 B1**
(45) Veröffentlichungstag und Bekanntmachung des Hinweises auf die Patenterteilung: **15.11.2017**
(21) Anmeldenummer: 14758808.1
(22) Anmeldetag: 20.08.2014
(51) Int. Cl.: B29C 73/16, B29L 30/00

(54) **VORRICHTUNG ZUM ABDICHTEN UND AUFPUMPEN AUFBLASBARER GEGENSTÄNDE**
DEVICE FOR SEALING AND INFLATING INFLATABLE OBJECTS
DISPOSITIF POUR ETANCHEIFIER ET GONFLER DES OBJETS GONFLABLES

(30) Priorität: 13.11.2013 DE 102013223108
(43) Veröffentlichungstag der Anmeldung: 21.09.2016
(73) Patentinhaber: Continental Reifen Deutschland GmbH, 30165 Hannover (DE)
(72) Erfinder: ZAUM, Christopher, 30926 Seelze (DE); DETERING, Rainer, 31535 Neustadt am Rbge (DE)
(74) Vertreter: Kilsch, Armin Ralph
(86) Internationale Anmeldenummer: PCT/EP2014/067696
(87) Internationale Veröffentlichungsnummer: WO 2015/070998

(56) Entgegenhaltungen:
- EP-A2- 2 064 051
- DE-A1-102011 001 603
- GB-A- 2 482 016
- US-A1- 2011 290 372
- US-A1- 2013 284 313

## Beschreibung

Die Erfindung betrifft eine Vorrichtung zum Abdichten und Aufpumpen aufblasbarer Gegenstände, insbesondere ein Pannenset zum Abdichten und Aufpumpen von Kraftfahrzeugreifen, wobei die Vorrichtung eine Druckluftquelle, insbesondere einen durch einen Motor, vorzugsweise einen Elektromotor angetriebenen Kompressor aufweist zum Aufpumpen der Gegenstände, sowie einen Anschluss für einen Behälter mit Dichtmittel, eine Ventil- und Verteilereinheit für Dichtmittel und Druckgas, weiterhin Verbindungsmittel aufweist wie etwa Schläuche zwischen Ventil- und Verteilereinheit und aufblasbarem Gegenstand, sowie ggf. Verbindungsmittel zur Energiezufuhr, und die übliche Schalt-, und/oder Steuer- und Anzeigeeinrichtungen, wie etwa Manometer für den Betrieb der Vorrichtung beinhaltet.

Bei Reifenpannen besteht in aller Regel das Problem, dass - wie beispielsweise bei einem PKW bisher üblich - ein gefüllter und auf einer Felge montierter Reservereifen mitgeführt werden muss, der dann anstelle des Rades mit dem defekten Reifen montiert wird, wonach der defekte Reifen in dem für den Reservereifen vorgesehenen Stauraum im Fahrzeug befestigt werden und später einer Reparatur zugeführt werden muss. Hierzu ist es nicht nur oft notwendig, ein beladenes Fahrzeug auszuräumen, um an den entsprechenden Stauraum zu gelangen, sondern es muss auch das Fahrzeug selbst mit Wagenhebern aufgebockt und eine umständliche Reparaturarbeit durchgeführt werden.

Um diese Nachteile zu vermeiden, sind bereits Reparatursätze oder Pannensets bekannt, die einen Kompressor, ein im Reifen koagulierendes Dichtmittel, meistens ein Latexmilch-Gemisch, die entsprechenden Verbindungsschläuche und die notwendigen Kabelanschlüsse zur Energiezufuhr sowie Schalter, Manometer und Bedienelement beinhalten und somit einen ständig einsetzbaren und vollständigen Reparatursatz bereitstellen, mit dem auf das Mitführen eines auf eine Felge aufgezogenen Reserverades oder auf die ständige Kontrolle anderer Reparaturmaterialien wie Schläuche, verschiedene Werkzeugschlüssel, Wagenheber etc. verzichtet werden kann.

So offenbart die DE 29812740 U1 einen Reparatursatz mit einem tragbaren Behälter zur Aufnahme von Bordwerkzeugen und Arbeitsgeräten für Fahrzeuge, insbesondere zur Aufnahme von Kompressor, Werkzeugen, Arbeitsgeräten und Zubehör zur Instandsetzung von Reifen, wobei der Behälter in Form eines Koffers ausgebildet ist und mehrere Teilräume für das Zubehör sowie Schalt-, Steuer- und Anzeigeeinrichtungen beinhaltet. Solche handelsüblichen Pannensets zur Reifenabdichtung müssen für jeden Laien auf einfachste Weise und ohne Fehlermöglichkeiten zu bedienen und von daher außergewöhnlich betriebssicher ausgebildet sein. Es sind deswegen eine Reihe von Einrichtungen erforderlich, die alle denkbaren Fehlbedienungen tolerant ausgleichen und in einfacher Weise zur richtigen Anwendung leiten.

Die EP 2 064 051 A2 offenbart hierzu eine Reparatureinrichtung für aufblasbarer Gegenstände gemäß dem Oberbegriff des Anspruchs 1. Die Reparatureinrichtung ist versehen mit Rückschlagventilen am Eintritt in den aufblasbaren Gegenstand und am Austritt des Dichtmittels aus einer Flasche. Die Rückschlagventile können durch entsprechend ausgebildete mechanischen Stößel bzw. Flaschenhalsvorsprünge geöffnet werden und verhindern so eine Fehlbedienung oder eine Fehlleitung von Druckmedium oder Dichtmittel.

Wie bereits dargelegt, werden die Lüftkompressoren für solche Pannensets zur temporären Reparatur von Reifenpannen werden üblicherweise über ein Anschlussstück, nämlich über die so genannte Ventil- und Verteilereinheit mit einer Dichtmittelflasche und dem zu reparierenden Reifen verbunden.

Die Ventil- und Verteilereinheit sorgt dafür, dass Druckluft vom Kompressor in den Dichtmittelbehälter/die Dichtmittelflasche geleitet wird und das Dichtmittel aus dem Behälter über ebenfalls die Ventil- und Verteilereinheit austreibt und über entsprechende Verbindungsschläuche in den Reifen befördert, d.h. dass also das Dichtmittel in den Reifen gepumpt wird. Die Ventil- und Verteilereinheit soll aber auch eine direkte Verbindung zwischen Kompressor und Reifen ermöglichen, wodurch ohne Einfüllen von Dichtmittel der Reifen lediglich aufgepumpt werden kann. Diese vielfältigen Nutzungsmöglichkeiten erfordern ein recht komplizierte Konstruktion einer solchen Ventil- und Verteilereinheit mit einer Reihe von Kanälen und Schaltfunktionen.

Bei herkömmlichen Konstruktionen von Pannensets wird die im Lagerungszustand üblicherweise versiegelte Dichtmittelflasche auf die Ventil- und Verteilereinheit aufgeschraubt. In aller Regel wird durch das Aufschrauben oder Aufsetzten wird die Versiegelung aufgebrochen und so der Dichtmittelbehälter/die Dichtmittelflasche automatisch betriebsbereit gestellt.

Mehr oder weniger kurz danach wird der Kompressor vom Bediener eingeschaltet. Im Hinblick auf die genannte Betriebssicherheit und auf das Vermeiden von denkbaren Fehlbedienungen können durch dieses zeitversetzte Einschalten des Kompressors nun kleinere Probleme entstehen. Vor Einschalten des Kompressors, d.h. im noch drucklosen Zustand des Systems kann das im Dichtmittelbehälter/in der Dichtmittelflasche enthaltende Reifendichtmittel möglicherweise auch gegen die vorgesehene Flussrichtung bewegt werden. Dies könnte geschehen z.B. beim Verkippen des Systems aus seiner üblichen Ruhelage oder aus dem vorgesehenen Stand. Fließt aber nun Reifendichtmittel gegen die vorgesehene Flussrichtung in den Kompressor, so könnte dieser beim späteren Betrieb beschädigt werden.

Um einen Rückfluss des Reifendichtmittels in bestimmte Systemkomponenten zu verhindern, wird im Stand der Technik üblicherweise ein Rückschlagventil eingesetzt oder ein verlängerter Luftweg zwischen Dichtmittelflasche und Kompressor vorgesehen. Nachteilig beim Einsatz eine solchen zusätzlichen Rückschlagventils ist es, dass der Einbau dieses Rückschlagventils eine genaue Druckmessung in dem zu reparierenden Reifen verhindert. Das kann für den Endbenutzer ein Sicherheitsrisiko darstellen. Ein verlängerter Luftweg dagegen erhöht die Material- und Produktionskosten und wirkt sich negativ auf die erreichte Systemleistung aus.

Für die Erfindung bestand daher die Aufgabe, eine Vorrichtung zum Abdichten und Aufpumpen aufblasbarer Gegenstände bereitzustellen, bei der bei einfacher Bauweise der Ventil- und Verteilereinheit ein Dichtmittelrückfluß in den Kompressor vermieden wird somit insgesamt ein hohe Betriebssicherheit erreicht und weitere denkbare Fehlbedienungen ausgeschlossen werden.

Gelöst wird diese Aufgabe durch die Merkmale des Hauptanspruchs. Weitere vorteilhafte Ausbildungen sind in den Unteransprüchen offenbart.

Dabei ist in der Ventil- und Verteilereinheit ein mit einem Ventilsitz zusammenwirkendes Ventil angeordnet, welches abhängig von der der Dichte und der Strömungsrichtung des durchströmenden Mediums die Verbindungen/Verbindungskanäle zwischen Dichtmittelbehälter und Druckluftquelle reversibel schließt.

Die Ausbildung ist dabei so, dass dann, wenn das Ventil bzw. der Ventilkörper von der Seite des Dichtmittelflaschenanschlusses mit Druck beaufschlagt wird, der Ventilkörper durch das Dichtmittel in einen Ventilsitz gepresst wird, wobei das Ventil geschlossen und ein Weiterfließen des Dichtmittels in empfindliche Bereiche des Dichtmittels oder Manometers verhindert wird. Ventilkörper und Ventilsitz sind dabei vorteilhafterweise so von ihrer Oberfläche so ausgelegt, dass keine vollständige Abdichtung erfolgt und abhängig von der Dichte des Mediums ein Durchströmen möglich ist. So kann beispielsweise Luft durchtreten, Dichtmittelflüssigkeit aber nicht.

Es kann also ein Druckausgleich mit dem hinter dem Ventil liegenden Kompressor oder/und Manometer erfolgen. Erfolgt das Schließen des Ventil mit Reifendichtmittel als betätigendem Medium, wird aufgrund der höheren Dichte des Dichtmittels eine vollständige Abdichtung des Ventils erreicht. Ein Eindringen von Dichtmittel in den Kompressor wird also verhindert.

In der normalen Betriebsposition erfolgt kein Dichtmittelrückfluss und die Ventilkugel gibt den Luftkanal frei. Wird das System bzw. die Vorrichtung zum Abdichten und Aufpumpen mitsamt der Ventil- und Verteilereinheit verkippt, z.B. in Richtung in des Kompressorauslasses, könnte Dichtmittel in den Kompressorauslass fließen. Durch die erfindungsgemäße Ventilausbildung wird dies verhindert und der Kompressorauslass verschlossen. Das Ventil ist also geschlossen und ein Dichtmittelrückfluss wird verhindert.

Vorteilhafterweise ist hierzu bei einer erfindungsgemäßen Vorrichtung, die mit einem Kompressor als Druckluftquelle ausgebildet ist, die Ventil- und Verteilereinheit zwischen dem Auslass des Dichtmittelbehälters und dem Auslassventil des Kompressors angeordnet.

Besonders gut wird das Schließen des Ventils abhängig von Dichte, Strömungsrichtung und Druck des Dichtmittels dann realisiert, wenn sich der Ventilsitz auf Seiten der Druckluftquelle bzw. des Auslassventils des Kompressors befindet.

Im Gegensatz zu einem etwa durch eine Federkraft betriebenen Rückschlagventil kann mit der erfindungsgemäßen Ausführung in der normalen Betriebsposition problemlos mit dem üblicherweise am Kompressor oder an der Ventil- und Verteilereinheit angeschlossenen Manometer der Luftdruck im Reifen bestimmt werden. Dadurch existiert kein Betriebszustand, bei dem das Druckmessgerät/das Manometer am Kompressor einen höheren Druck anzeigen würde, als den, der tatsächlichen im Reifen vorhanden ist.

Eine vorteilhafte Weiterbildung besteht darin, dass das Ventil mindestens eine in einem Käfig oder Hohlraum bewegliche Kugel als Ventilkörper aufweist und dadurch schließbar ist, dass die Kugel durch Strömungskräfte in einen mit der Kugeloberfläche korrespondierenden Ventilsitz gedrückt wird. Ein solches Ventil ist sehr beweglich und gegen zufälliges Verklemmen oder anhaften unempfindlich. Vorteilhafterweise sind in solch einem System Einrichtungen vorgesehen, die in Strömungsrichtung der Druckluft auf der dem Ventilsitz gegenüberliegenden Seite, also z. B. im Bereich der Einlassöffnung zum Dichtmittelbehälter, vermeiden, dass der Ventilkörper durch zufällige Anlage an Öffnungsquerschnitte den Luftstrom in den Dichtmittelbehälter blockiert.

Eine weitere vorteilhafte Ausbildung im Sinne einer sehr einfachen Konstruktion besteht darin, dass das Ventil als Klappenventil ausgebildet ist, und durch Strömungskräfte in einen korrespondierenden Ventilsitz gedrückt wird.

Eine weitere vorteilhafte Ausbildung besteht darin, dass der Verbindungskanal zwischen dem Auslass des Dichtmittelbehälters und der Druckleitung des Kompressors als rohrförmiger Hohlraum und der Ventilsitz als ein in den Verbindungskanal eingesetztes und endseitig mit dem Ventil korrespondierendes Rohrstück ausgebildet sind. Damit ist eine Konstruktion erreichbar, deren einzelne Elemente sehr einfach herzustellen sind. In einer solchen Ausführung können die o.g. Einrichtungen, die ein Blockieren vermeiden sollen, als in dem Rohr oder rohrförmigen Hohlkörper eingebrachte Rippen ausgebildet sein, an die sich der Ventilkörper unter Bereitstellung eines Durchlasses zwischen Ventilkörper und Wandung anlegen kann.

Eine weitere vorteilhafte Ausbildung besteht darin, dass der Ventilsitz oder das Ventil so ausgebildet sind, dass es auch abhängig von der Lage der Ventil- und Verteilereinheit die Verbindungen/Verbindungskanäle zwischen Dichtmittelbehälter und Druckluftquelle reversibel schließt. Dadurch wird die reversible Schließfunktion auch noch durch eine Strömungskraft unterstützt oder verstärkt und die Funktionsweise der Vorrichtung weiter verbessert. Eine besonders vorteilhafte Ausbildung eines auch lageabhängig schließenden Ventils besteht darin, dass im Betriebszustand der Behälter mit Dichtmittel über Kopf in die Ventil- und Verteilereinheit eingesetzt, vorzugsweise eingeschraubt und das Ventil so ausgebildet ist, dass eine Abweichung von mehr als 20° von der Überkopflage des Dichtmittelbehälters ein Schließen des Ventils bewirkt. Damit ist in der üblichen Reparaturlage ein sicherer Betrieb möglich, während bei einem versehentlichen "Umfallen" der Vorrichtung ein unbemerkter Rückfluss von Dichtmittel in kritische Bereiche verhindert wird.

Eine weitere vorteilhafte Ausbildung besteht darin, dass die Oberfläche des Ventilsitzes oder des Ventilkörpers Rauigkeiten oder Vertiefungen aufweisen, die abhängig von der Mediumsdichte einen Durchfluss durch das geschlossene Ventil ermöglichen. So wird z.B. Luft durchgelassen, während Dichtmitteldurchfluss blockiert wird. Dies führt dazu, dass eine Druckmessung im System, d.h. in den Bereichen vor und hinter dem Ventil, in jedem Betriebszustand, also auch bei "geschlossenem" Ventil möglich wird.

Anhand eines Ausführungsbeispiels soll die Erfindung näher erläutert werden. Es zeigen
- Fig. 1: einen Ausschnitt aus einer erfindungsgemäße Vorrichtung mit einem durch Strömungskräfte schließenden Kugelventil ,
- Fig. 2: eine vergrößerte Detaildarstellung eines als Ventilsitz ausgebildeten Rohrkörpers einer erfindungsgemäßen Vorrichtung.

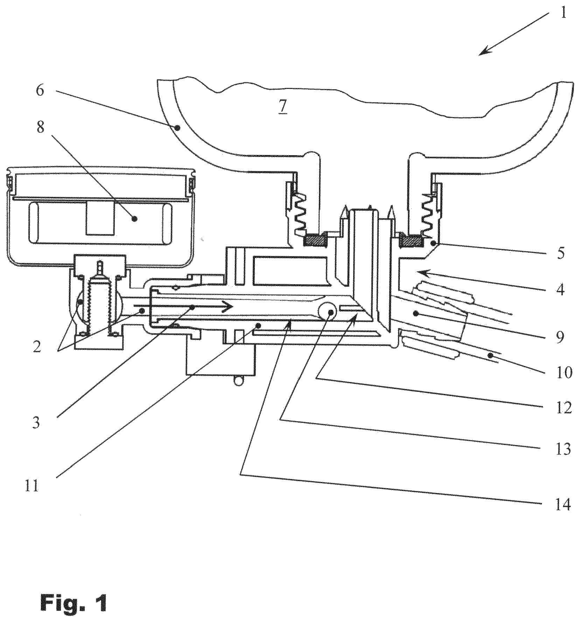

Die Fig. 1 zeigt einen Ausschnitt aus einer erfindungsgemäße Vorrichtung 1 zum Abdichten und Aufpumpen aufblasbarer Gegenstände, nämlich ein Pannenset zum Abdichten und Aufpumpen von Kraftfahrzeugreifen, wobei die Vorrichtung 1 einen hier nicht näher dargestellten und an die Leitung/Druckleitung 2 angeschlossenen Kompressor aufweist. Die übliche Strömungsrichtung der Luft in der Leitung 2 im normalen Betriebszustand ist durch den Strömungspfeil 3 dargestellt. Die Vorrichtung 1 weist weiterhin eine Ventil- und Verteilereinheit 4 für Dichtmittel und Druckgas auf mit einem Anschluss 5 für einen Behälter 6 mit Dichtmittel 7. An der Ventil- und Verteilereinheit 4 ist im Bereich der Leitung 2 auch ein Manometer 8 angeschlossen, mit dem der Luftdruck im Leitungssystem und auch der Luftdruck im Reifen im Reifen bestimmt werden können.

Die Ventil- und Verteilereinheit 4 für Dichtmittel und Druckgas beinhaltet weiterhin Verbindungsmittel zum Anschluss eines aufblasbaren Gegenstands, nämlich eines hier nicht näher dargestellten Reifens. Hierzu dient der Anschluss 9 und der zum Reifen führende Schlauch 10.

In der Ventil- und Verteilereinheit ist ein mit einem Ventilsitz zusammenwirkendes Ventil angeordnet, welches abhängig von der der Dichte und der Strömungsrichtung des durchströmenden Mediums die Verbindungen/Verbindungskanäle zwischen Dichtmittelbehälter und Druckluftquelle reversibel schließt.

In der in Fig.1 gezeigten Ausführung ist der Verbindungskanal 11 zwischen dem Auslass 12 des Dichtmittelbehälters 6 und der Druckleitung 2 des Kompressors als rohrförmiger Hohlraum ausgebildet, wobei der Ventilsitz 15 durch ein Ende eines in den Verbindungskanal 11 eingesetzten und endseitig mit einem kugelförmigen Ventilkörper 13 korrespondierenden Rohrstücks 14 gebildet wird.

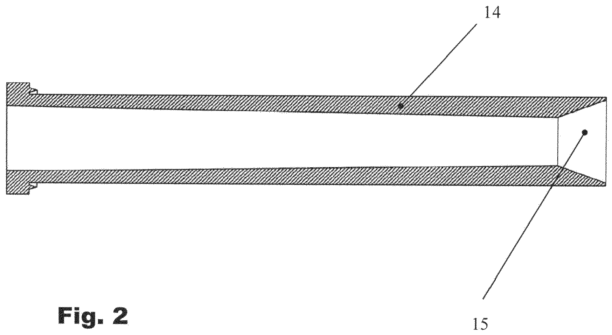

Das Ventil weist also eine in einem Hohlraum bewegliche Kugel als Ventilkörper auf und ist dadurch schließbar, dass die Kugel durch Strömungskräfte in einen mit der Kugeloberfläche korrespondierenden Ventilsitz 15 des Rohrstücks 14 gedrückt wird. In der Fig.2 ist in einer vergrößerten Ansicht das Rohrstück 14 als Einzelteil näher dargestellt, Dort erkennt man auch den Ventilsitz 15 besonders gut.

Bei der hier als Kompressor ausgebildeten Druckluftquelle ist also die Ventil- und Verteilereinheit zwischen dem Auslass des Dichtmittelbehälters und dem hier nicht näher dargestellten Auslassventil des Kompressors und auch zwischen Manometer und Auslass des Dichtmittelbehälters angeordnet ist, wobei sich bei der Ventilsitz auf Seiten der Manometers bzw des Kompressors befindet. Ein solches Ventil natürlich kann auch zwischen Kompressor-Auslass und Manometer eingesetzt werden, jedoch sind dann ggf. empfindliche Manometerteile nicht gegen Dichtmittelrückfluß geschützt.

### Bezugszeichenliste

### (Teil der Beschreibung)

- 1: Vorrichtung zum Abdichten und Aufpumpen aufblasbarer Gegenstände
- 2: Leitung/Druckleitung
- 3: Strömungspfeil
- 4: Ventil- und Verteilereinheit
- 5: Anschluss für Behälter
- 6: Behälter
- 7: Dichtmittel
- 8: Manometer
- 9: Anschluss
- 10: Schlauch
- 11: Verbindungskanal
- 12: Auslass
- 13: Ventilkörper
- 14: Rohrstück
- 15: Ventilsitz

## Patentansprüche

1. Vorrichtung (1) zum Abdichten und Aufpumpen aufblasbarer Gegenstände, insbesondere Pannenset zum Abdichten und Aufpumpen von Kraftfahrzeugreifen, wobei die Vorrichtung eine Druckluftquelle, insbesondere einen Kompressor aufweist zum Aufpumpen der Gegenstände sowie einen Anschluss (5) für einen Behälter (6) mit Dichtmittel (7), eine Ventil- und Verteilereinheit (4) für Dichtmittel und Druckgas, weiterhin Verbindungsmittel aufweist wie etwa Schläuche (10) zwischen Ventil- und Verteilereinheit und aufblasbarem Gegenstand, **dadurch gekennzeichnet, dass** in der Ventil- und Verteilereinheit (4) ein mit einem Ventilsitz (15) zusammenwirkendes Ventil angeordnet ist, welches abhängig von der Dichte und der Strömungsrichtung des durchströmenden Mediums die Verbindungen/Verbindungskanäle zwischen Dichtmittelbehälter und Druckluftquelle reversibel schließt.

2. Vorrichtung nach Anspruch 1, ausgebildet mit einem Kompressor als Druckluftquelle, bei der die Ventil- und Verteilereinheit zwischen (4) dem Auslass (12) des Dichtmittelbehälters (6) und dem Kompressor bzw. dem Auslassventil des Kompressors angeordnet ist.

3. Vorrichtung nach Anspruch 1 oder 2, bei der sich der Ventilsitz (15) auf Seiten der Druckluftquelle bzw. des Kompressors befindet.

4. Vorrichtung nach einem der Ansprüche 1 bis 3, bei der das Ventil mindestens eine in einem Käfig oder Hohlraum bewegliche Kugel (13) als Ventilkörper aufweist und dadurch schließbar ist, dass die Kugel durch Strömungskräfte in einen mit der Kugeloberfläche korrespondierenden Ventilsitz (15) gedrückt wird.

5. Vorrichtung nach Anspruch 1, bei der das Ventil als Klappenventil ausgebildet ist, und durch Strömungskräfte in einen korrespondierenden Ventilsitz gedrückt wird.

6. Vorrichtung nach einem der Ansprüche 2 bis 5, bei der der Verbindungskanal (11) zwischen dem Auslass des Dichtmittelbehälters und der Druckleitung des Kompressors als rohrförmiger Hohlraum und der Ventilsitz (15) als ein Ende eines in den Verbindungskanal eingesetztes und endseitig mit dem Ventilkörper (13) korrespondierendes Rohrstück (14) ausgebildet sind.

7. Vorrichtung nach einem der Ansprüche 1 bis 6, bei der Ventilsitz oder das Ventil so ausgebildet sind, dass es abhängig von der Lage der Ventil- und Verteilereinheit (4) die Verbindungen/Verbindungskanäle (11) zwischen Dichtmittelbehälter und Druckluftquelle reversibel schließt

8. Vorrichtung nach Anspruch 7, bei der im Betriebszustand der Behälter mit Dichtmittel über Kopf in die Ventil- und Verteilereinheit eingesetzt, vorzugsweise eingeschraubt und das Ventil so ausgebildet ist, dass eine Abweichung von mehr als 20° von der Überkopflage des Dichtmittelbehälters ein Schließen des Ventils bewirkt.

9. Vorrichtung nach einem der Ansprüche 1 bis 8, bei der die Oberfläche des Ventilsitzes (15) oder des Ventilkörpers (13) Rauigkeiten oder Vertiefungen aufweisen, die abhängig von der Mediumsdichte einen Durchfluss durch das geschlossene Ventil ermöglichen.

## Claims

1. Apparatus (1) for sealing and pumping up inflatable objects, in particular a breakdown kit for sealing and pumping up motor-vehicle tyres, wherein the apparatus has a compressed-air source, in particular a compressor, for pumping up the objects and also has a connection (5) for a container (6) with sealant (7), further a valve/distributor unit (4) for sealant and compressed gas, and in addition connecting means such as, for example, hoses (10) between the valve/distributor unit and inflatable object, **characterized in that** the valve/distributor unit (4) contains a valve which interacts with a valve seat (15) and, in dependence on the density and the flow direction of the medium flowing through, reversibly closes the connections/connecting channels between the sealant container and compressed-air source.

2. Apparatus according to Claim 1, designed with a compressor forming the compressed-air source, in the case of which the valve/distributor unit is arranged between (4) the outlet (12) of the sealant container (6) and the compressor or the outlet valve of the compressor.

3. Apparatus according to Claim 1 or 2, in the case of which the valve seat (15) is located in the vicinity of the compressed-air source or of the compressor.

4. Apparatus according to one of Claims 1 to 3, in the case of which the valve has a valve body in the form of at least one ball (13) which is movable in a cage or cavity, and the valve can be closed by the ball being pushed by flow forces into a valve seat (15) which corresponds with the ball surface.

5. Apparatus according to Claim 1, in the case of which the valve is designed in the form of a flap valve and is pushed by flow forces into a corresponding valve seat.

6. Apparatus according to one of Claims 2 to 5, in the case of which the connecting channel (11) between the outlet of the sealant container and the pressure line of the compressor is designed in the form of a tubular cavity and the valve seat (15) is designed in the form of one end of a piece of tube (14) which is inserted into the connecting channel and corresponds, at the end, to the valve body (13).

7. Apparatus according to one of Claims 1 to 6, in the case of which the valve seat or the valve is designed such that, in dependence on the position of the valve/distributor unit (4), it reversibly closes the connections/connecting channels (11) between the sealant container and compressed-air source.

8. Apparatus according to Claim 7, in the case of which, in the operating state, the container with sealant is inserted, preferably screwed, in an upended state into the valve/distributor unit, and the valve is designed such that a deviation of more than 20° from the upended position of the sealant container causes the valve to close.

9. Apparatus according to one of Claims 1 to 8, in the case of which the surface of the valve seat (15) or of the valve body (13) exhibits areas of roughness or depressions which, in dependence on the density of the medium, allow throughflow through the closed valve.

## Revendications

1. Dispositif (1) pour étanchéifier et gonfler des objets gonflables, en particulier kit de dépannage pour étanchéifier et gonfler des pneus de véhicule automobile, le dispositif présentant une source d'air sous pression, en particulier un compresseur pour gonfler les objets et un raccord (5) pour un récipient (6) contenant un agent d'étanchéité (7), une unité de soupape et de distribution (4) pour l'agent d'étanchéité et le gaz sous pression, ainsi que des moyens de connexion tels que des tuyaux (10) entre l'unité de soupape et de distribution et l'objet gonflable, **caractérisé en ce qu'**une soupape coopérant avec un siège de soupape (15) est disposée dans l'unité de soupape et de distribution (4), laquelle ferme de manière réversible, en fonction de la densité et du sens d'écoulement du fluide s'écoulant, les connexions/canaux de connexion entre le récipient d'agent d'étanchéité et la source d'air sous pression.

2. Dispositif selon la revendication 1, réalisée avec un compresseur en tant que source d'air sous pression, dans lequel l'unité de soupape et de distribution est disposée entre (4) la sortie (12) du récipient d'agent d'étanchéité (6) et le compresseur ou la soupape de sortie du compresseur.

3. Dispositif selon la revendication 1 ou 2, dans lequel le siège de soupape (15) se trouve du côté de la source d'air sous pression ou du compresseur.

4. Dispositif selon l'une quelconque des revendications 1 à 3, dans lequel la soupape présente au moins une bille (13) déplaçable dans une cage ou une cavité en tant que corps de soupape et peut être fermée par le fait que la bille est pressée par les forces d'écoulement dans un siège de soupape (15) correspondant à la surface de la bille.

5. Dispositif selon la revendication 1, dans lequel la soupape est réalisée sous forme de soupape à clapet et est pressée par des forces d'écoulement dans un siège de soupape correspondant.

6. Dispositif selon l'une quelconque des revendications 2 à 5, dans lequel le canal de connexion (11) entre la sortie du récipient d'agent d'étanchéité et la conduite sous pression du compresseur est réalisé sous forme de cavité tubulaire et le siège d'étanchéité (15) est réalisé sous forme d'une extrémité d'une pièce tubulaire (14) insérée dans le canal de connexion et correspondant, du côté de l'extrémité, au corps de soupape (13).

7. Dispositif selon l'une quelconque des revendications 1 à 6, dans lequel le siège de soupape ou la soupape sont réalisés de telle sorte qu'en fonction de la position de l'unité de soupape et de distribution (4), il ou elle ferme de manière réversible les connexions/canaux de connexion (11) entre le récipient d'agent d'étanchéité et la source d'air sous pression.

8. Dispositif selon la revendication 7, dans lequel, dans l'état de fonctionnement, le récipient avec l'agent d'étanchéité est inséré tête en bas dans l'unité de soupape et de distribution, de préférence par vissage, et la soupape est réalisée de telle sorte qu'un écart de plus de 20° de la position tête en bas du récipient d'agent d'étanchéité provoque une fermeture de la soupape.

9. Dispositif selon l'une quelconque des revendications 1 à 8, dans lequel la surface du siège de soupape (15) ou du corps de soupape (13) présente des rugosités ou des renfoncements qui, en fonction de la densité du milieu, permettent un écoulement à travers la soupape fermée.
